# EUROPEAN PATENT SPECIFICATION

(11) **EP 2 318 557 B1**
(45) Date of publication and mention of the grant of the patent: **05.10.2016**
(21) Application number: 09778213.0
(22) Date of filing: 31.08.2009
(51) Int. Cl.: C22B 1/16, C22B 1/20, F27B 21/06, B65G 11/10, F27D 3/00, F27D 3/10, F27D 25/00

(54) **CHARGING DEVICE FOR SINTER RAW MATERIAL WITH ELASTIC DEFLECTOR MAT**
VORRICHTUNG ZUM FÖRDERN VON SINTERROHMATERIAL MIT ELASTISCHER ABLENKKLAPPE
DISPOSITIF DE CHARGEMENT POUR MATIÈRES PREMIÈRES DE FRITTAGE, À MAT DÉFLECTEUR ÉLASTIQUE

(30) Priority: 03.09.2008 DE 102008045600
(43) Date of publication of application: 11.05.2011
(73) Proprietor: Outotec (Finland) Oy, 02230 Espoo (FI)
(72) Inventor: GERLACH, Walter, 60388 Frankfurt (DE); BAROWSKI, Helmut, 61449 Steinbach / Ts. (DE); BECKER, Roger, 64291 Darmstadt (DE); EMMEL, Jürgen, 64584 Biebesheim (DE)
(74) Representative: Keil & Schaafhausen Patent- und Rechtsanwälte PartGmbB
(86) International application number: PCT/EP2009/006284
(87) International publication number: WO 2010/025878

(56) References cited:
- DE-A1- 2 814 494
- JP-A- 1 159 331
- JP-A- 55 002 716
- JP-A- 63 186 834
- KR-B1- 100 668 699
- DATABASE WPI Week 198415 Thomson Scientific, London, GB; AN 1984-093427 XP002563782 -& SU 1 025 985 A1 (ZHDANOV METAL INST) 30 June 1983 (1983-06-30)
- DATABASE WPI Week 199024 Thomson Scientific, London, GB; AN 1990-179132 XP002563783 -& BR 8 804 887 A (CIA SIDE PAULISTA) 15 May 1990 (1990-05-15)

## Description

### Background of the Invention

This invention relates to a device for charging raw sinter mixture onto a pallet car of a sintering machine, with a storage bin from which the raw sinter mixture I is removed via an outlet opening and with an arrangement for discharging the raw sinter mixture emerging from the outlet opening onto the pallet car or the like.

During sintering in iron metallurgy, fine ores and concentrates are not directly useable as blast furnace feed material. They are agglomerated to produce a suitable product in size and composition for the blast-furnace process. For sintering purposes, a raw sinter mixture is produced, which contains iron ores, additives and coke as fuel, and via a charging device it is charged onto the pallet car of the sintering machine circulating as an endless chain of pallet cars. The coke contained in the raw sinter mixture is ignited, and an induced-draft below the pallet cars created by an ID fan draws the burning front through the sinter mixture, so that a sinter cake completely burnt through is obtained at the discharge end of the sinter machine. Due to the heat produced in the process, the fine ores will partly melt at the surface, so that their grains undergo a firm connection. Upon separation of hearth layer and sinter return fines, the finished sinter is supplied to the blast furnace, or in case of manganese ore to the electrical arc furnace.

It is desired that the bed of raw sinter mixture on the pallet cars obtain a specific structure, since the permeability of the bed is essential for the vertical sinter speed. With increasing permeability of the sinter layer, the combustion and hence also the temperature control is more easy, which leads to an increase in the amount of sintered product and in the sinter quality. The objective here is to arrange fine material at the top and coarse material at the bottom in the pallet car layer, without achieving too much separation of the individual components of the mixture, for instance an enrichment of fuel in the bottom layer. In addition, accretions and the disintegration of granulated particles should be avoided during charging. Material deposits along the path of the particles to the pallet car are not desired.

### CONFIRMATION COPY

In a known solution for selectively charging the raw sinter mixture onto the pallet car, the separation of coarse and fine particles is effected by means of a separating plate made of steel, which utilizes the principle of the inertia of the particles. Coarse particles have a greater inertia and during impact on the separating plate rather follow the path of the plate, whereas during impact of the finer particles the same are accelerated in horizontal direction depending on the angle of the plate and therefore impinge on the grate carriage with a time delay and are arranged above the coarse particles. In such a device known from JP 55002716 A, the sinter mixture is charged onto a curved plate, so that the rolling distance of the raw sinter mixture material is increased. This should promote the segregation into finer and coarser particles.

From JP 10121155 A, it is known to guide the raw sinter mixture onto a chute, which is arranged, on an elastic body. After sliding along the chute, the material is supplied to a rake-like distributing device, by which the material is divided into coarser and finer particles and is applied onto the grate carriage.

In the device known from JP 10009772 A, the segregation is achieved by a multipart chute, in which the individual chute portions are arranged at different angles.

In the device known from JP 11118358 A, a rubber mat is arranged on the steel plate, on which the raw sinter mixture I withdrawn from the storage bin impinges. Material accretions are scraped off by means of a plate.

A charging method for sintering raw material is known from document JP 63186834 A wherein the height of the raw-material layer is controlled by detecting the height of the layer and allowing a plate cleaner provided on a deflector plate to perform a reciprocating motion.

Document JP 01159331 A discloses a device for charging sintering raw material which comprises an approach chute, a slit chute, a lower chute and a deflected chute. The sintering raw materials in a hopper are fed by means of a drum feeder onto a moving pallet of the sintered ore producing plant by means of the charging chute.

A further device for charging sintering raw material onto a pellet car of a sintering machine is known from DE 28 144 94 A1 wherein between a feeding drum and the pellet car a rotatable colliding drum is provided.

### Summary of the Invention

It is the object of the invention to achieve a specific structure of the sinter bed, wherein accretions of the sinter material are reliably prevented at the same time.

In accordance with the invention, this object is solved with the features of claim 1. The arrangement for discharging the sinter material emerging from the outlet opening onto the pallet cars includes a mat which is hanging down from a suspension, wherein below the suspension a supporting element is provided, which is offset in horizontal direction with respect to the mat suspension such that the mat rests against the supporting element.

The portion of the mat resting against the supporting element is deflected from the vertical orientation, so that a chute is formed for the sinter material. Due to the free suspension, however, the mat can yield during impingement of the raw sinter mixture , so that a compaction of the material during impingement on the mat and an adhesion of the material to the mat are avoided. Since the mat is not firmly connected with the substructure serving as supporting element, this substructure can be configured more easily and simply than in the prior described way.

In accordance with a preferred aspect of the invention, the mat freely rests against the supporting element, so that the resilience during impingement of the raw sinter mixture is further increased.

In accordance with a particularly preferred aspect of the invention, the mat is made of an elastic material, in particular rubber, in order to even further increase the resilience.

In accordance with a development of the invention, the mat has a coating that can additionally counteract the accretion of material.

Preferably, the upper suspension of the mat is adjustable in horizontal and/or vertical direction, in order to vary the impact angle and hence make the same optimally adjustable to alternating product properties. In accordance with the invention, the distance between mat and supporting element can also be adjusted, whereby the elasticity during impingement of the raw sinter mixture can be influenced selectively.

In accordance with a preferred embodiment, the suspension of the mat is attached to at least one carrying member on whom recesses are provided for the suspension of the mat. In this way, a selective variation of the curvature of the mat can be achieved in a simple way.

In accordance with one aspect of the invention, the supporting element is formed by at least one horizontal tube against which rests the mat.

In accordance with another preferred aspect of the invention, a plurality of tubes are arranged one above the other, which each are arranged with a spacing. The distance between the tubes can be varied in accordance with the invention, in order to be able to selectively adjust the curvature of the individual mat portions. In accordance with a development of this invention, the tubes are movable in horizontal and/or vertical direction, so that not only the distance between the same and hence the resilience of the mat resting on the same, but also the angle of inclination of the mat can flexibly be adjusted.

In accordance with another preferred aspect of the invention, the supporting element is formed by a sheet whose inclination preferably is adjustable.

In accordance with a development of the invention, the accretion of raw sinter mixture additionally can be prevented by providing a device for blowing air or the like against the back of the mat, by means of which the mat can selectively be oscillated. The blowing device preferably includes a plurality of nozzles distributed along the length of the tubes and over the width of the mat for emitting the air or the like. Also other vibrating means are envisaged.

Developments, advantages and possible applications of the invention can also be taken from the following description of embodiments and the drawing. All features described and/or illustrated form the subject matter of the invention per se or in any combination, independent of their inclusion in the claims or their back-reference.

### Brief Description of the Drawings

- Fig. 1: schematically shows a charging device in accordance with a first embodiment of the present invention,
- Fig. 2: schematically shows a charging device in accordance with a second embodiment of the present invention, and
- Fig. 3: shows the suspension of the mat.

### Detailed Description of the Preferred Embodiments

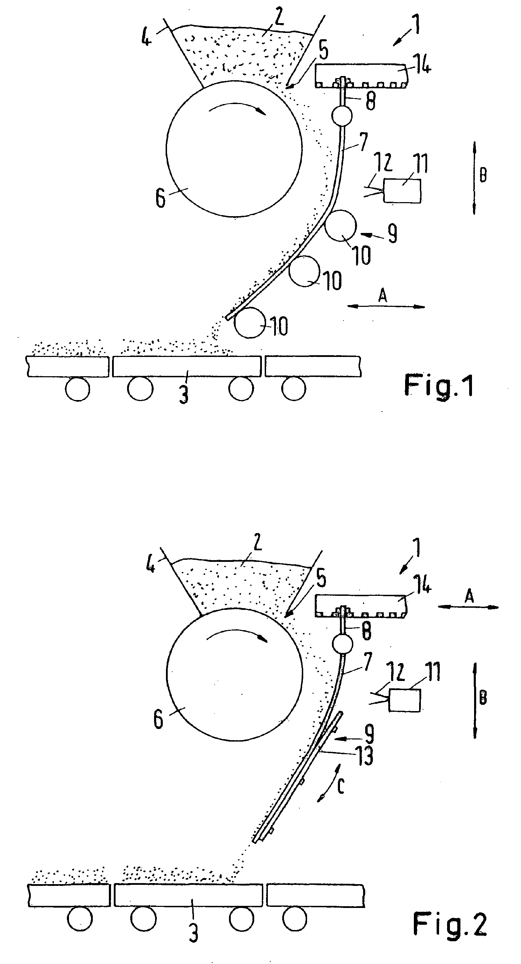

In the device 1 for charging raw sinter mixture 2 onto a pallet car 3 of a sintering machine, only parts of which are shown in Fig. 1, the raw sinter mixture which contains for instance iron ores, additives and coke as fuel is discharged from a storage bin 4 through an outlet opening 5. Conveyance here is achieved by means of a feeding drum 6, which rotates and transports the raw sinter mixture through the outlet opening 5. By gravity, the raw sinter mixture then drops onto a mat 7 of elastic material, in particular rubber, and slips onto the pallet car 3 disposed below the same.

The pallet car 3 is part of a chain of pallet cars (travelling grate) 3 circulating as an endless chain, which transport the sinter mixture through the sintering machine and upon completion of the sintering process dump the product sinter at the discharge end of the sinter machine as a completely burnt through and fused sinter cake (not shown).

The mat 7 hangs down from a suspension 8 and rests on a supporting element 9 at least with its lower portion. The supporting element 9 is offset with respect to the suspension 8 in direction of travel of the pallet cars 3 such that the mat 7 is deflected from the vertical direction and curved. The suspension 8 of the mat 7 is adjustable in vertical and/or horizontal direction (direction of the arrows A and B), so that the distance of the mat 7 from the supporting element 9 and hence the resilience of the mat 7 is adjustable. Due to the vertical adjustability, the impact angle also is continuously adjustable and thereby can optimally be adapted to alternating product properties.

In the first embodiment of the invention as shown in Fig. 1, the supporting element 9 is formed by a plurality of horizontal tubes 10, which are adjustable in horizontal and/or vertical direction (direction of the arrows A and B) by means of a non-illustrated adjusting means. Preferably, the tubes 10 are individually movable, so that the distance between the same and the curvature and inclination of the mat 7 are selectively adjustable. It turned out to be expedient to provide the biggest radius in the upper region, since this optimally counteracts accretions and a grain disintegration. The curvature then slowly decreases in downward direction, so that the raw sinter mixture 2 is uniformly directed onto the pallet car 3 in the desired shape.

When raw sinter mixture 2 from the storage bin 4 is applied onto the mat 7, the mat 7 will yield elastically, whereby accretions of material can reliably be prevented. Here, it is essential that the mat 7 freely rests on the supporting element 9 and can yield elastically upon impingement of the material 2, so that compactions of the material 2 upon impingement on the mat 7 can be avoided. The mat 7 also can have a coating, for instance of Al₂O₃, which additionally counteracts the adhesion of raw sinter mixture 2.

Behind the mat 7, a device 11 can be provided for blowing air or the like against the back of the mat 7. The blowing device 11 can include a plurality of nozzles 12 distributed over the width and/or height of the mat 7 for emitting the air. In this way, possibly occurring material deposits can be removed again, in that for instance air is intermittently blasted onto the back of the mat 7, and the material deposits thereby are chipped off. In addition, a deposition of material can be prevented during operation by an active movement of the mat 7 by means of the blowing device 11 or any other vibration means.

In the second embodiment of the invention as shown in Fig. 2, the supporting element 9 is formed by a sheet 13, whose inclination can be varied by a non-illustrated adjusting means (direction of the arrow C). It can also be provided that the sheet 13 is movable in horizontal direction (direction of the arrows A and B).

In a non-illustrated modification of the second embodiment, one or more sheets with portions of different inclination are provided instead of one continuous sheet, so that the angle of inclination of the mat 7 can be adjusted even more flexibly similar to the arrangement with a plurality of tubes 10.

The remaining structure and the mode of operation of the second embodiment correspond to those of the first embodiment as shown in Fig. 1, so that in so far reference is made to the above description.

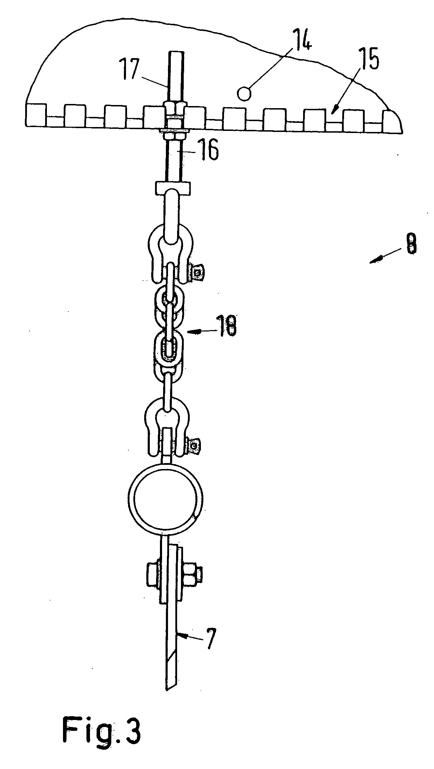

In Fig. 3, the suspension 8 of the mat 7 is shown in detail. In the carriage member 14, raster-like recesses 15 are provided in uniform intervals, in which a holder of the mat 7, for instance in the form of a nut 17 and a threaded bolt 16, is hung in. The threaded bolt 16 is connected with the mat 7 via a connecting means 18. By setting the nut 17 onto the threaded bolt 16 in different distances , the height of the mat 7 and hence the distance to the supporting element 9 and the impact angle can be varied. By lifting the nut 17 with the elements hanging thereon and by shifting the same into another recess 15, for instance by means of a hoist, the mat 7 can be adjusted horizontally, in order to thereby also vary the distance to the supporting element 9 and the angle of inclination of the mat 7 in the region of impingement of the material 2. Positioning the mat usually is merely effected during initial start up of the sintering machine or conversion to other materials and need therefore not be performed frequently. Instead of the illustrated suspension 8, other devices can of course also be provided, in order to movably mount the mat 7 in horizontal and/or vertical direction.

With the invention, a deposition of raw sinter mixture 2 onto the charging device 1 is prevented in a simple way, wherein the device can flexibly be adapted to the properties of the used raw sinter mixture 2 by adjusting the position of the mat 7 and/or the supporting element 9. Due to the resilience of the mat 7, a disintegration of granulated particles during charging can be avoided. At the same time, a desired structure of the bed obtained in the pallet cars 3 can be achieved by adjusting the impact angle and the inclination of the mat 7.

### List of Reference Numerals

- 1: charging device
- 2: raw sinter mixture
- 3: pallet car
- 4: storage bin
- 5: outlet opening
- 6: feed drum
- 7: mat
- 8: suspension
- 9: supporting element
- 10: rods
- 11: blowing device
- 12: nozzles
- 13: sheet
- 14: carrying member
- 15: recesses
- 16: threaded bolt
- 17: nut
- 18: connecting means

## Claims

1. A device for charging raw sinter mixture (2) onto a pallet car (3) of a sintering machine, with a storage bin (4) from which the raw sinter mixture is removed by means of a feeding drum (6) via an outlet opening (5), and with an arrangement for discharging the raw sinter mixture (2) emerging from the outlet opening (5) onto the pallet car (3) or the like, **characterized in that** the arrangement includes a mat (7) which hangs down from a suspension (8), and that below the suspension (8) a supporting element (9) is provided, which is offset with respect to the suspension (8) in horizontal direction such that the mat (7) rests against the supporting element (9).

2. The device according to claim 1, **characterized in that** the mat (7) freely rests against the supporting element (9).

3. The device according to claim 1 or 2, **characterized in that** the mat (7) is made of an elastic material, in particular rubber.

4. The device according to any of the preceding claims, **characterized in that** the mat (7) has a coating.

5. The device according to any of the preceding claims, **characterized in that** the upper suspension (8) of the mat (7) is adjustable in horizontal and/or vertical direction.

6. The device according to any of the preceding claims, **characterized in that** the suspension (8) of the mat (7) is attached to at least one carrying member (14) on which recesses (15) are provided for the suspension (8) of the mat (7).

7. The device according to any of the preceding claims, **characterized in that** the distance between the mat (7) and the supporting element (9) is adjustable.

8. The device according to any of the preceding claims, **characterized in that** the supporting element (9) is formed by at least one horizontal tube (10).

9. The device according to claim 8, **characterized in that** a plurality of tubes (10) are arranged one above the other, wherein a spacing each is provided between the same.

10. The device according to claim 9, **characterized in that** the spacing between the tubes (10) is variable.

11. The device according to any of claims 8 to 10, **characterized in that** the tubes (10) are adjustable in horizontal and/or vertical direction.

12. The device according to any of claims 1 to 7, **characterized in that** the supporting element (9) is formed by a sheet (13).

13. The device according to claim 12, **characterized in that** the inclination of the sheet (13) is adjustable.

14. The device according to any of the preceding claims, **characterized by** a device (11) for blowing air or vibrating means against the back of the mat (7).

15. The device according to claim 14, **characterized in that** the device includes a plurality of nozzles (12) for emitting air or the like, which are distributed over the width and/or height of the mat (7).

## Patentansprüche

1. Vorrichtung zur Aufgabe von Sintermaterial (2) auf einen Rostwagen (3) einer Sintermaschine, mit einem Speicherbehälter (4), aus welchem das Sintermaterial mittels einer Fördertrommel (6) über eine Aufgabeöffnung (5) abgeführt wird, und mit einer Anordnung zur Ableitung des aus der Aufgabeöffnung (5) austretenden Sintermaterials (2) auf den Rostwagen (3) oder dgl., **dadurch gekennzeichnet, dass** die Anordnung eine Matte (7) aufweist, welche von einer Aufhängung (8) nach unten herabhängt, und dass unterhalb der Aufhängung (8) ein Stützelement (9) vorgesehen ist, welches gegenüber der Aufhängung (8) derart in horizontaler Richtung versetzt ist, dass die Matte (7) an dem Stützelement (9) anliegt.

2. Vorrichtung nach Anspruch 1, **dadurch gekennzeichnet, dass** die Matte (7) frei an dem Stützelement (9) anliegt.

3. Vorrichtung nach Anspruch 1 oder 2, **dadurch gekennzeichnet, dass** die Matte (7) aus einem elastischen Material, insbesondere Gummi, besteht.

4. Vorrichtung nach einem der vorhergehenden Ansprüche, **dadurch gekennzeichnet, dass** die Matte (7) eine Beschichtung aufweist.

5. Vorrichtung nach einem der vorhergehenden Ansprüche, **dadurch gekennzeichnet, dass** die obere Aufhängung (8) der Matte (7) in horizontaler und/oder vertikaler Richtung verstellbar ist.

6. Vorrichtung nach einem der vorhergehenden Ansprüche, **dadurch gekennzeichnet, dass** die Aufhängung (8) der Matte (7) an wenigstens einer Schiene (14) befestigt ist, an welcher eine Rasterung (15) für die Aufhängung (8) der Matte (7) vorgesehen ist.

7. Vorrichtung nach einem der vorhergehenden Ansprüche, **dadurch gekennzeichnet, dass** der Abstand zwischen der Matte (7) und dem Stützelement (9) verstellbar ist.

8. Vorrichtung nach einem der vorhergehenden Ansprüche, **dadurch gekennzeichnet, dass** das Stützelement (9) durch wenigstens eine horizontale Stange (10) gebildet wird.

9. Vorrichtung nach Anspruch 8, **dadurch gekennzeichnet, dass** mehrere Stangen (10) übereinander angeordnet sind, wobei zwischen ihnen jeweils ein Abstand vorgesehen ist.

10. Vorrichtung nach Anspruch 9, **dadurch gekennzeichnet, dass** der Abstand zwischen den Stangen (10) veränderbar ist.

11. Vorrichtung nach einem der Ansprüche 8 bis 10, **dadurch gekennzeichnet, dass** die Stangen (10) in horizontaler und/oder vertikaler Richtung verstellbar sind.

12. Vorrichtung nach einem der Ansprüche 1 bis 7, **dadurch gekennzeichnet, dass** das Stützelement (9) durch ein Blech (13) gebildet wird.

13. Vorrichtung nach Anspruch 12, **dadurch gekennzeichnet, dass** die Neigung des Bleches (13) verstellbar ist.

14. Vorrichtung nach einem der vorhergehenden Ansprüche, **gekennzeichnet durch** eine Vorrichtung (11) zum Blasen von Luft oder dgl. gegen die Rückseite der Matte (7).

15. Vorrichtung nach Anspruch 14 **dadurch gekennzeichnet, dass** die Vorrichtung mehrere über die Breite und/oder Höhe der Matte (7) verteilte Düsen (12) zum Ausstrahlen der Luft oder dgl. aufweist.

## Revendications

1. Dispositif pour charger un mélange de matières premières de frittage (2) sur un chariot pour palettes (3) d'une machine de frittage, avec une trémie de stockage (4) de laquelle le mélange de matières premières de frittage est prélevé au moyen d'un tambour d'alimentation (6) via une ouverture de sortie (5), et avec un système pour décharger le mélange de matières premières de frittage (2) émergeant par l'ouverture de sortie (5) sur le chariot pour palettes (3) ou similaire, **caractérisé en ce que** le système comprend un tapis (7) qui pend vers le bas à partir d'une suspension (8) et **en ce que** sous la suspension (8), un élément de support (9) est fourni, lequel est décalé par rapport à la suspension (8) dans une direction horizontale de manière à ce que le tapis (7) repose contre l'élément de support (9).

2. Dispositif selon la revendication 1, **caractérisé en ce que** le tapis (7) repose librement contre l'élément de support (9).

3. Dispositif selon la revendication 1 ou 2, **caractérisé en ce que** le tapis (7) est formé par une matière élastique, en particulier du caoutchouc.

4. Dispositif selon l'une quelconque des revendications précédentes, **caractérisé en ce que** le tapis (7) a un revêtement.

5. Dispositif selon l'une quelconque des revendications précédentes, **caractérisé en ce que** la suspension supérieure (8) du tapis (7) est ajustable dans une direction horizontale et/ou verticale.

6. Dispositif selon l'une quelconque des revendications précédentes, **caractérisé en ce que** la suspension (8) du tapis (7) est attachée à au moins un élément porteur (14) sur lequel des creux (15) sont fournis pour la suspension (8) du tapis (7).

7. Dispositif selon l'une quelconque des revendications précédentes, **caractérisé en ce que** la distance entre le tapis (7) et l'élément de support (9) est ajustable.

8. Dispositif selon l'une quelconque des revendications précédentes, **caractérisé en ce que** l'élément de support (9) est formé par au moins un tube horizontal (10).

9. Dispositif selon la revendication 8, **caractérisé en ce qu'**une pluralité de tubes (10) sont disposés les uns au-dessus des autres, dans lequel un espacement respectif est fourni entre ces mêmes.

10. Dispositif selon la revendication 9, **caractérisé en ce que** l'espacement entre les tubes (10) est variable.

11. Dispositif selon l'une quelconque des revendications 8 à 10, **caractérisé en ce que** les tubes (10) sont ajustables dans une direction horizontale et/ou verticale.

12. Dispositif selon l'une quelconque des revendications 1 à 7, **caractérisé en ce que** l'élément de support (9) est formé par une plaque (13).

13. Dispositif selon la revendication 12, **caractérisé en ce que** l'inclinaison de la plaque (13) est ajustable.

14. Dispositif selon l'une quelconque des revendications précédentes, **caractérisé par** un dispositif (11) pour souffler de l'air ou un moyen de vibration contre l'arrière du tapis (7).

15. Dispositif selon la revendication 14, **caractérisé en ce que** le dispositif comprend une pluralité de buses (12) pour émettre de l'air ou similaire, lesquelles sont réparties sur la largeur et/ou la hauteur du tapis (7).
